# EUROPEAN PATENT APPLICATION

(11) **EP 3 962 094 A1**
(43) Date of publication of application: **02.03.2022**
(21) Application number: 21190248.1
(22) Date of filing: 09.08.2021
(51) Int. Cl.: H04N 21/426, G06F 1/3203

(54) **MODE SWITCH DEVICE OF VIDEO CARD**

(30) Priority: 27.08.2020 TW 109129256
(71) Applicant: Giga-Byte Technology Co., Ltd., New Taipei City (TW)
(72) Inventor: HUANG, Shun-Chih, New Taipei City (TW); CHANG, Chih-Lung, New Taipei City (TW); LU, Ching-Yu, New Taipei City (TW); HUANG, Wen-Cheng, New Taipei City (TW)
(74) Representative: dompatent von Kreisler Selting Werner - Partnerschaft von Patent- und Rechtsanwälten mbB

(57) **Abstract**

A mode switching device (1, 1') of a video card includes a switching circuit (11, 11'), a memory (13, 13') and a processing circuit (15, 15'), wherein the processing circuit (15, 15') is electrically connected to the switching circuit (11, 11') and the memory (13, 13'). The switching circuit (11, 11') is configured to generate a switching instruction that indicates a designated usage mode among a number of alternative usage modes. The memory (13, 13') stores a number of BIOS setting parameter sets that respectively correspond to the alternative usage modes. The processing circuit (15, 15') is configured to be driven by the switching instruction to operate according to a designated parameter set corresponding to the designated usage mode among the BIOS setting parameter sets.

## Description

### CROSS-REFERENCE TO RELATED APPLICATIONS

This application claims priority on Patent Application No(s). 109129256 filed in Taiwan (R.O.C.) on August 27, 2020, the entire contents of which are hereby incorporated by reference.

### BACKGROUND

### 1. Technical Field

The disclosure relates to a mode switching device, and particularly to a mode switching device of a video card.

### 2. Related Art

The video card is one of the basic components of a personal computer. It is configured to convert the display information required by the computer system, and accordingly drive and control the display. The video card is the bridge between the display and the main board, and has a wide range of uses. It can be applied to a server, a game console, or a gaming PC. The requirements for the specifications and parameter settings of the video card vary in different applications. Therefore, if manufacturers would like to turn out various video cards for different applications, they need to create various bills of materials (BOM) and deploy production lines for types of cards, which is costly.

### SUMMARY

In order to solve the above problem, the disclosure provides a mode switching device of a video card.

According to an embodiment of the disclosure, a mode switching device of a video card includes a switching circuit, a memory and a processing circuit, wherein the processing circuit is electrically connected to the switching circuit and the memory. The switching circuit is configured to generate a switching instruction that indicates a designated usage mode among a number of alternative usage modes. The memory stores a number of BIOS setting parameter sets that respectively correspond to the alternative usage modes. The processing circuit is configured to be driven by the switching instruction to operate according to the designated parameter set corresponding to the designated usage mode among the BIOS setting parameter sets.

In view of the above architecture, the mode switching device of the video card provided in the disclosure may integrate the specifications and parameter settings for different applications into a video card by storing multiple BIOS setting parameter sets and disposing a switching circuit. In this way, the manufacturing cost can be reduced.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
FIG. 1 is a functional block diagram of a mode switching device of a video card according to an embodiment of the disclosure; and
FIG. 2 is a functional block diagram of a mode switching device of a video card according to another embodiment of the disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawings.

The disclosure provides a mode switching device applied to a video card capable of providing various usage modes, wherein said various usage modes may include server mode, game mode, etc. More specifically, when the mode switching device switches the video card to the server mode, the video card can be applied to a server; when the mode switching device switches the video card to the game mode, the video card can be applied to a game console or a gaming PC. In the following, multiple embodiments of the mode switching device are described.

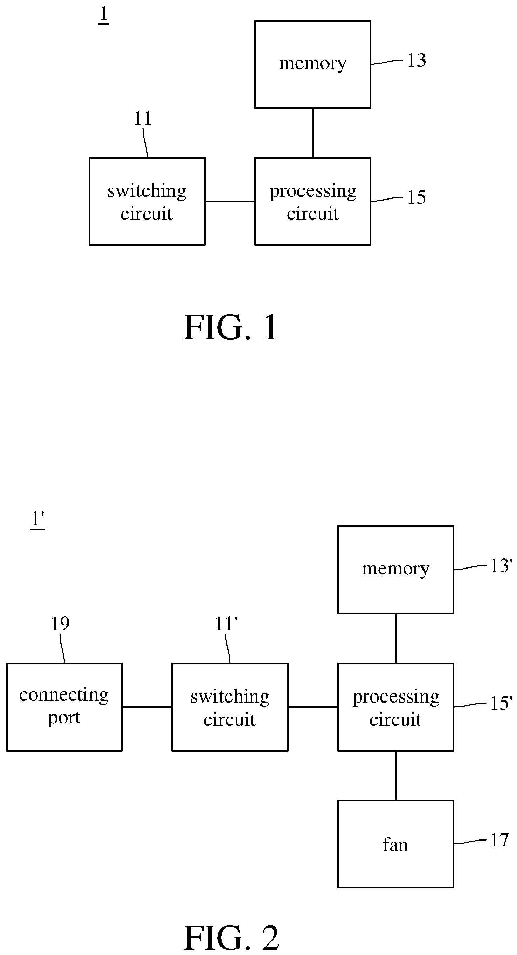

Please refer to FIG. 1, a functional block diagram of a mode switching device of a video card according to an embodiment of the disclosure. As shown in FIG. 1, a mode switching device 1 of a video card includes a switching circuit 11, a memory 13 and a processing circuit 15, wherein the processing circuit 15 is electrically connected to the switching circuit 11 and the memory 13.

The switching circuit 11 is configured to generate a switching instruction, wherein the switching instruction indicates a designated usage mode among a number of alternative usage modes. The alternative usage modes may include two or more of server mode, game mode and other usage modes of the machine to which the video card is applicable. The switching circuit 11 may include one or more hardware elements such as electronic switching element, mechanical switching element, etc. In the implementation where the switching circuit 11 includes one switching element, when the switching element of the switching circuit 11 is triggered by a human action (such as pressing, flipping, etc., but is not limited to these), the switching circuit 11 generates the switching instruction that switches the current usage mode to one of the alternative usage mode(s) except the current usage mode as the designated usage mode. In the example where the alternative usage modes include the server mode and the game mode, if the current usage mode is the server mode, the switching instruction generated by the switching circuit 11 indicates that the game mode is the designated usage mode when the switching element is triggered. In the implementation where the switching circuit 11 includes a number of switching elements that may respectively correspond to a number of alternative usage modes, when one of the switching elements is triggered, the switching circuit 11 generates the switching instruction that the alternative usage mode corresponding to the triggered switching element is switched as the designated usage mode.

In another implementation, the switching circuit 11 includes a wire transmission connecting port, such as an I²C, a system management bus (SMBUS), a serial peripheral interface (SPI), a universal asynchronous receiver-transmitter (UART), a RS-232, a universal serial bus, etc., or a wireless transmission connecting port, such as a Bluetooth transceiver, a Wi-Fi transceiver, etc., which may receive the signal indicating switching operation from the software interface of an external device (such as a mobile application on a mobile phone). The switching circuit 11 regards this signal as the switching instruction, or converts this signal as the switching instruction. More particularly, the signal indicating the switching operation may indicate the designated usage mode. In yet another implementation, the switching circuit 11 may include a microcontroller (MCU) capable of receiving the signal indicating the switching operation, and then enabling or disabling the designated signal pin(s) so as to make the signal transmission in a conducting state or a non-conducting state, thereby switching between different usage modes.

The memory 13 is, for example, read-only memory, flash memory or other nonvolatile memory, and stores a number of BIOS setting parameter sets. The BIOS setting parameter sets respectively correspond to the alternative usage modes mentioned above. In particular, the BIOS setting parameter sets and the alternative usage modes have one-to-one correspondence therebetween. More particularly, each of the BIOS setting parameter sets may include the operating frequency parameter of the processing circuit 15, such as frames per second (FPS). For example, the operating frequency parameter included in BIOS setting parameter set corresponding to the server mode has a first value, and the operating frequency parameter included in BIOS setting parameter set corresponding to the game mode has a second value, wherein the second value is larger than the first value, and the first value is close to the original frequency. More specifically, for the server mode, in order to have good stability, operating at the original frequency is preferable; for the game mode, in order to have high processing performance, operating at high frequency is preferable. Moreover, the BIOS setting parameter set may also include a power consumption parameter. For example, the BIOS setting parameter set corresponding to the game mode includes a high power consumption parameter.

The processing circuit 15 is, for example, a graphics processing unit (GPU), and configured to be driven by the switching instruction to operate according to the designated parameter set corresponding to the designated usage mode among the BIOS setting parameter sets. As mentioned above, the BIOS setting parameter set may include the operating frequency parameter. Therefore, the processing circuit 15 may operate according to the operating frequency parameter included in the designated parameter set corresponding to the designated usage mode.

Please refer to FIG. 2, a functional block diagram of a mode switching device of a video card according to another embodiment of the disclosure. As shown in FIG. 2, the mode switching device 1' of a video card includes a switching circuit 11', a memory 13', a processing circuit 15', a fan 17 and a connecting port 19, wherein the processing circuit 15' is electrically connected to the switching circuit 11', the memory 13' and the fan 17, and the connecting port 19 is electrically connected to the switching circuit 11'.

The switching circuit 11' is substantially the same as the switching circuit 11 in the aforementioned embodiment of FIG. 1, configured to generate a switching instruction, and may include one or more switching elements, a connecting port or a microcontroller. Therefore, the mechanism of generating the switching instruction performed by the switching circuit 11' is not repeated here. Besides generating the switching instruction and providing it to the processing circuit 15', the switching circuit 11' may further make the electrical connection between the processing circuit 15' and the connecting port 19 in a conducting state or a non-conducting state according to the switching instruction. More particularly, besides the element(s) for generating the switching instruction, the switching circuit 11' may further include a switching element disposed between the processing circuit 15' and the connecting port 19. This switching element may be controlled by the switching instruction to be in a conducting state or a non-conducting state, and the detailed control mechanism is described later.

The memory 13' is, for example, read-only memory, flash memory or other nonvolatile memory. The memory 13' stores a number of BIOS setting parameter sets that respectively correspond to the alternative usage modes mentioned above. In particular, the alternative usage modes and the BIOS setting parameter sets have one-to-one correspondence therebetween. In this embodiment, each of the BIOS setting parameter sets may include the rotating speed parameter of the fan 17. For example, the rotating speed parameter of the fan 17 included in the BIOS setting parameter set corresponding to the server mode has the first value, and rotating speed parameter of the fan 17 included in the BIOS setting parameter set corresponding to the game mode has the second value, wherein the first value is larger than the second value. More specifically, for the server mode, in order to have a good heat dissipation function, operating the fan 17 at high rotating speed is preferable; for the game mode, in order to reduce noise, operating the fan 17 at low rotating speed is preferable.

The processing circuit 15' is, for example, a graphics processing unit (GPU), and configured to be driven by the switching instruction to operate according to the designated parameter set corresponding to the designated usage mode among the BIOS setting parameter sets. More particularly, the processing circuit 15' may control the fan 17 according to the rotating speed parameter of the fan 17 included in the designated parameter set. Moreover, each of the BIOS setting parameter sets stored in the memory 13' may also include the operating frequency parameter and/or power consumption parameter as described in the embodiment of FIG. 1, and the processing circuit 15' may also operate according to the designated parameter set as described in the embodiment of FIG. 1. The details are not repeated here.

The connecting port 19 is, for example, a PCIe system management bus or an I²C bus, and configured to be electrically connected to a main board. As mentioned above, the switching circuit 11' may make the electrical connection between the processing circuit 15' and the connecting port 19 in the conducting state or the non-conducting state according to the switching instruction. In other words, the switching circuit 11' may control the processing circuit 15' to connect or not connect to the main board according to the switching instruction. For example, when the designated usage mode indicated by the switching instruction is the server mode, the electrical connection between the processing circuit 15' and the connecting port 19 is in the conducting state; when the designated usage mode indicated by the switching instruction is the game mode, the electrical connection between the processing circuit 15' and the connecting port 19 is in the non-conducting state. More specifically, for the server mode, in order for the main board to read the video card information, such as video card ID, part number (PN), product serial number (SN), power consumption, etc., conducting the electrical connection between the processing circuit 15' and the connecting port 19 is preferable; for the game mode, since it is not necessary for the main board to read the video card information, not conducting the electrical connection between the processing circuit 15' and the connecting port 19 is preferable.

It should be noted that the mode switching device 1' shown in FIG. 2 includes both of the fan 17 and the connecting port 19, but in yet another embodiment, one of the fan 17 and the connecting port 19 is provided. In the embodiment where the connecting port 19 is not provided, the processing circuit 15' may adjust its own operating frequency parameter and/or power consumption and control the rotating speed of the fan 17 according to the designated parameter set. In the embodiment where the fan 17 is not provided, the processing circuit 15' may adjust its own operating frequency parameter and/or power consumption and control the conduction relationship between the processing circuit 15' and the main board according to the designated parameter set.

In view of the above architecture, the mode switching device of the video card provided in the disclosure may integrate the specifications and parameter settings for different applications into a video card by storing multiple BIOS setting parameter sets and disposing a switching circuit. In this way, the manufacturing cost can be reduced.

## Claims

1. A mode switching device (1, 1') of a video card, comprising:
a switching circuit (11, 11') configured to generate a switching instruction that indicates a designated usage mode among a plurality of alternative usage modes;
a memory (13, 13') storing a plurality of BIOS setting parameter sets that respectively correspond to the plurality of alternative usage modes; and
a processing circuit (15, 15') electrically connected to the switching circuit (11, 11') and the memory (13, 13'), and configured to be driven by the switching instruction to operate according to a designated parameter set corresponding to the designated usage mode among the plurality of BIOS setting parameter sets.

2. The mode switching device (1, 1') according to claim 1, wherein each of the plurality of BIOS setting parameter sets comprises an operating frequency parameter of the processing circuit (15, 15'), and the processing circuit (15, 15') operates according to the operating frequency parameter comprised in the designated parameter set.

3. The mode switching device (1, 1') according to claim 2, wherein the operating frequency parameter comprised in the designated parameter set has a first value when the designated usage mode is a server mode, and the operating frequency parameter comprised in the designated parameter set has a second value when the designated usage mode is a game mode, with the second value larger than the first value.

4. The mode switching device (1') according to claim 1, further comprising a fan (17) electrically connected to the processing circuit (15'), wherein each of the plurality of BIOS setting parameter sets comprises a rotating speed parameter of the fan (17), and as being driven by the switching instruction, the processing circuit (15') controls the fan (17) according to the rotating speed parameter comprised in the designated parameter set.

5. The mode switching device (1') according to claim 4, wherein the rotating speed parameter comprised in the designated parameter set has a first value when the designated usage mode is a server mode, and the rotating speed parameter comprised in the designated parameter set has a second value when the designated usage mode is a game mode, with the first value larger than the second value.

6. The mode switching device (1') according to claim 1, further comprising a connecting port (19) electrically connected to the switching circuit (11') and configured to be connected to a main board, wherein the switching circuit (11') further make an electrical connection between the connecting port (19) and the processing circuit (15') in a conducting state or a non-conducting state according to the switching instruction.

7. The mode switching device (1') according to claim 6, wherein the electrical connection is in the conducting state when the designated usage mode is a server mode, and the electrical connection is in the non-conducting state when the designated usage mode is a game mode.

8. The mode switching device (1, 1') according to claim 1, wherein the switching circuit (11, 11') comprises an electronic switching element or a mechanical switching element.

9. The mode switching device (1, 1') according to claim 1, wherein switching circuit (11, 11') comprises one of an I²C, a system management bus, a serial peripheral interface, a universal asynchronous receiver-transmitter, a RS-232 and a universal serial bus, and is configured to receive a signal indicating switching from an external device, and accordingly generate the switching instruction.

10. The mode switching device (1, 1') according to claim 1, wherein the switching circuit (11, 11') comprises a microcontroller.
